# EUROPÄISCHE PATENTSCHRIFT

(11) **EP 0 832 381 B1**
(45) Veröffentlichungstag und Bekanntmachung des Hinweises auf die Patenterteilung: **07.04.2004**
(21) Anmeldenummer: 96914041.7
(22) Anmeldetag: 04.06.1996
(51) Int. Cl.: F16J 15/26

(54) **DICHTUNGSRINGSCHEIBE FÜR EINE KOLBENSTANGE**
SEALING WASHER FOR A PISTON SHAFT
RONDELLE D'ETANCHEITE POUR ARBRE DE PISTON

(30) Priorität: 14.06.1995 EP 95810399
(43) Veröffentlichungstag der Anmeldung: 01.04.1998
(73) Patentinhaber: Burckhardt Compression AG, 8404 Winterthur (CH)
(72) Erfinder: FEISTEL, Norbert, CH-8408 Winterthur (CH)
(74) Vertreter: Dr. Graf & Partner
(86) Internationale Anmeldenummer: PCT/CH1996/000213
(87) Internationale Veröffentlichungsnummer: WO 1997/000394

(56) Entgegenhaltungen:
- DE-A- 2 644 119
- DE-C- 19 367
- DE-C- 641 578
- FR-A- 1 249 037

## Beschreibung

Die Erfindung betrifft eine Dichtungsringscheibe für eine Kolbenstange, insbesondere für eine Kolbenstange von trockenlaufenden Kolbenkompressoren, die im Verdichtungsteil ohne jede Fremdschmierung auskommen. Solche Kompressoren weisen feststehende Dichtelemente auf, an denen eine Kolbenstange vorbeibewegt wird. Dabei sind mehrere Dichtelemente üblicherweise paarweise in einer Reihenschaltung hintereinander angeordnet und bilden derart eine sogenannte Packung. Ein derartiges in einer Packung angeordnetes Paar von Dichtelementen ist aus DE-42 01 246 C2 bekannt. Diese Anordnung und Ausführung von Dichtelementen weist den Nachteil auf, dass jeweils zwei Dichtelemente in Bewegungsrichtung der Kolbenstange nebeneinander liegend anzuordnen sind, um die Dichtfunktion zu erfüllen. Ein bekanntes Problem solcher Dichtungen an Kolbenstangen ist die entstehende Reibungswärme. Eine Abfuhr der Reibungswärme über die Dichtungselemente selbst ist nur in geringem Mass möglich, da die Dichtungselemente üblicherweise aus Kunststoff ausgebildet sind und thermisch nahezu als Isolator wirken. Der grösste Teil der Reibungswärme wird daher auf eine deutlich weniger effiziente Weise durch die Kolbenstange abgeführt. Die auftretende Reibwärme ist deshalb zu einem grossen Teil für einen hohen Verschleiss verantwortlich. Daher ist oft eine aufwendige Kühlung der die Dichtelemente enthaltende Packung erforderlich.

Die Druckschrift DE-C-641 578 offenbart eine weitere, aus zwei Dichtelementen bestehende Packung, deren Dichtflächen in Bewegungsrichtung der Kolbenstange nebeneinander liegend angeordnet sind, um die Dichtfunktion zu erfüllen. Auch diese Packung weist die vorhin beschriebenen Nachteile auf.

Die Druckschrift FR 1249037 offenbart einen aus zumindest zwei Dichtelementen bestehenden Kolbenring mit einer nach aussen gerichteten Dichtfläche. Dieser Kolbenring weist keine nach innen gerichteten Dichtflächen auf, und ist auch auf Grund seiner sonstigen Ausgestaltung nicht geeignet zur Dichtung einer Kolbenstange.

Es ist Aufgabe der vorliegenden Erfindung, diese bekannten Nachteile von Dichtungselementen zu überwinden.

Diese Aufgabe wird gelöst gemäss den Merkmalen von Anspruch 1. Die Unteransprüche 2 bis 9 beziehen sich auf weitere vorteilhafte Ausführungsformen.

Die erfindungsgemässe Dichtungsringscheibe eignet sich insbesondere für trockenlaufende Ringkolben-Kompressoren, wobei die Dichtungsringscheiben aus einem Kunststoff mit sogenannten selbstschmierenden Eigenschaften bestehen. Solche Dichtungsringscheiben werden z. B. verwendet als Kolbenstangendichtungen (Stopfbüchse, Packung), bei denen die Kolbenstange an den feststehenden Dichtelementen vorbeibewegt wird. Aufgrund der geringen Warmfestigkeit von polymeren Dichtungsmaterialien kann die entstehende Reibungswärme zu grossen thermischen Problemen führen. Ein Vorteil der erfindungsgemässen Dichtungsringscheibe ist darin zu sehen, dass die Dichtungsringscheibe in Bewegungsrichtung der Kolbenstange relativ dünn ausgeführt werden kann, und dass im Vergleich zum zitierten Stand der Technik zur Gewährleistung der Dichtfunktion anstelle von bisher zwei Dichtungsringen eine einzige Dichtungsringscheibe genügt. Die erfindungsgemässe, relativ dünne Diehtungsringscheibe weist den Vorteil auf, dass ein erhöhter Märmefluss durch Strahlung von der Kolbenstange zum Metallgehäuse der Packung möglich ist, da die als Isolator wirkende Dichtungsringscheibe geringere Dimensionen aufweist, und dass das Verhältnis der nicht durch Dichtungsringe überdeckten Kolbenstangenoberfläche zur Summe der Dichtungsringkontaktfläche wesentlich günstiger wird. Ein weiterer Vorteil der erfindungsgemässen Dichtungsringscheibe ist darin zu sehen, dass auf die aus dem Stand der Technik bekannten radialen Trennfugen verzichtet werden konnte. Dadurch ist es nicht mehr notwendig zwei nebeneinander liegende Dichtungsringscheiben zu verwenden, sondern es genügt die Verwendung einer einzigen Dichtungsringscheibe. Als Material für die Dichtungsringscheibe eignen sich Kunststoffe für Trockenlaufanwendungen wie gefüllte Polymere mit einer Matrix aus Polythetrafluorethylen (PTFE) oder eine Mischung von mechanisch festen, hochtemperaturbeständigen und verschleissfesten modifizierten Polymeren wie Polyetheretherketon(PEEK), Polyetherketon(PEK), Polyimid (PI), Polyphenylensulfid (PPS), Polybenzimidazol (PBI), Polyamidimid (PAI) oder auch Epoxidharz.

Die erfindungsgemässe Dichtungsringscheibe ist aus modifiziertem PEEK herstellbar. Dies weist den Vorteil auf, dass sich sehr schmale Ringe herstellen lassen, so dass die Kolbenstange einerseits die Wärme über Strahlungswärme besser an die Packung übertragen kann und dass andererseits eine kleinere Reibungsfläche zwischen Dichtungsring und Kolbenstange besteht, was die Erwärmung zudem reduziert. Somit kann eine zu hohe Erwärmung der Kolbenstange verhindert werden, was den Vorteil aufweist, dass die aus PEEK bestehende Dichtungsringscheibe nicht thermisch überlastet wird oder gar schmilzt.

In den folgenden Figuren werden verschiedene Ausführungsbeispiele der Erfindung beschrieben. Es zeigen:
- Fig. 1a: eine Aufsicht eines ringförmigen Dichtungsteils;
- Fig. 1b: eine Seitenansicht des Dichtungsteils gemäss Fig. 1a;
- Fig. 1c: eine Aufsicht auf ein Abschlussteil;
- Fig. 1d: eine Seitenansicht des Abschlussteils gemäss Fig. 1c;
- Fig. 1e: eine zusammengesetzte Dichtungsringscheibe in Aufsicht;
- Fig. 1f: eine Seitenansicht der zusammengesetzten Dichtungsringscheibe gemäss Fig. 1e;
- Fig. 1g: einen Schnitt durch das Dichtungsteil gemäss Fig. 1a entlang der Linie A-A;
- Fig. 1h: eine perspektivische Ansicht der Teile einer Dichtungsringscheibe;
- Fig. 2a: eine Aufsicht eines ringförmigen Dichtungsteils;
- Fig. 2b: eine Seitenansicht des Dichtungsteils gemäss Fig. 2a;
- Fig. 2c: eine Aufsicht auf ein Abschlussteil;
- Fig. 2d: eine Seitenansicht des Abschlussteils gemäss Fig. 2c;
- Fig. 3a: eine Dichtungsringscheibe mit exzentrischem Dichtungsteil und Abschlussteil;
- Fig. 3b: eine Seitenansicht der Dichtungsringscheibe gemäss Fig. 3a;
- Fig. 4a: ein weiteres Ausführungsbeispiel eines Dichtungsteils;
- Fig. 4b: eine Seitenansicht des Dichtungsteils gemäss Fig. 4a;
- Fig. 4c: ein Abschlussteil in Aufsicht;
- Fig. 4d: eine Seitenansicht des Abschlussteils gemäss Fig. 4c;
- Fig. 4e: eine zusammengesetzte Dichtungsringscheibe;
- Fig. 4f: eine Seitenansicht der Dichtungsringscheibe gemäss Fig. 4e und
- Fig. 5: einen Radialschnitt durch eine erfindungsgemässe Dichtungsanordnung im montierten Zustand.

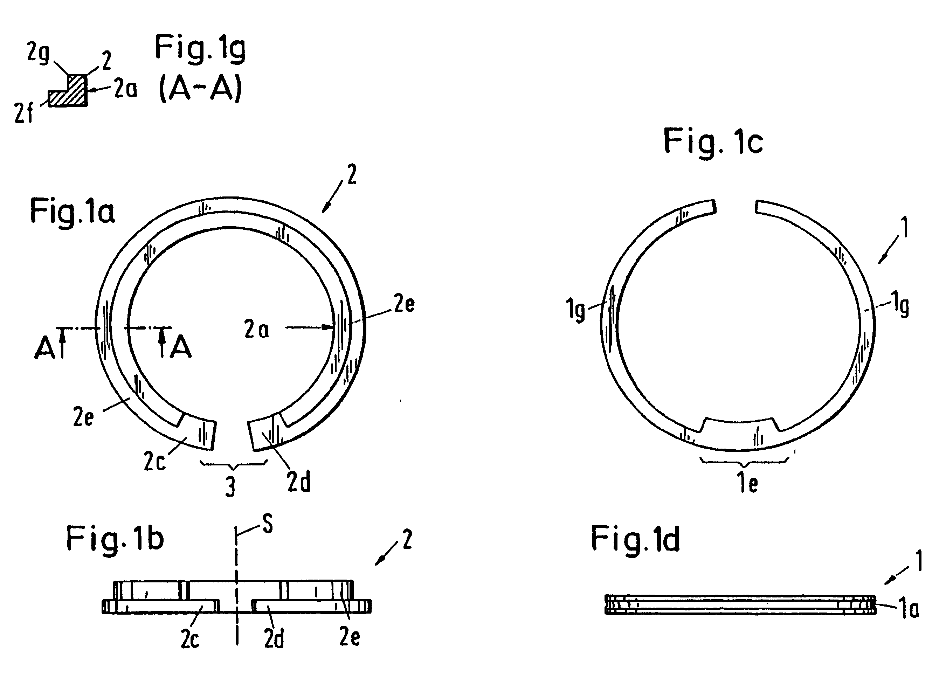

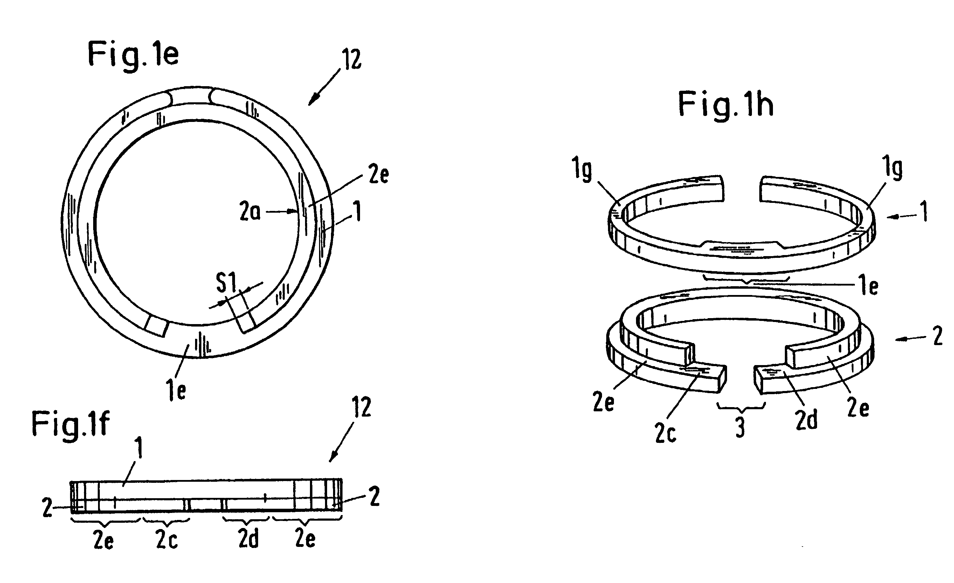

Fig. 1a sowie Fig. 1h zeigen einen ringförmigen Dichtungsteil 2, der einen sektorartigen Ausschnitt 3 aufweist, so dass das Dichtungsteil 2 an dieser Stelle eine Öffnung aufweist. Das Dichtungsteil 2 weist eine zur Kolbenstange 4 hin orientierte Dichtfläche 2a auf, welche eine Dichtfunktion ausübt. Fig. 1g zeigt einen Schnitt entlang der Linie A-A, und zeigt den L-förmigen Querschnitt, den das Dichtungsteil 2 in der vorliegenden Ausführungsform aufweist. Das Dichtungsteil 2 weist ein Hauptteil 2e auf, welches beidseitig in die Endteile 2c, 2d ausläuft. Aus der Seitenansicht gemäss Fig. 1b ist ersichtlich, dass die beiden Endteile 2c, 2d in Richtung einer Senkrechten S zu einer durch das Dichtungsteil 2 aufgespannten Ebene bzw. zur Bewegungsrichtung der Kolbenstange 4 dünner ausgestaltet sind als das Hauptteil 2e. Fig. 1c zeigt ein Abschlussteil 1, das ein Hauptteil 1e aufweist, sowie beidseitig daran anschliessende Endteile 1g, welche ringförmig ausgestaltet sind. Fig. 1d zeigt eine Seitenansicht der Darstellung gemäss Fig. 1c des Abschlussteils 1, wobei das Abschlussteil 1 in umfangsrichtung eine Ausnehmung 1a zur Aufnahme einer Schlauchfeder 13 aufweist. Sowohl das Dichtungsteil 2 als auch das Abschlussteil 1 weisen federnde Eigenschaften auf. Fig. 1e zeigt ein aus dem Abschlussteil 1 und dem Dichtungsteil 2 zusammengesetzte Dichtungsringscheibe 12. Dabei wurde das Abschlussteil 1 derart auf das Dichtungsteil 2 gelegt, dass das Abschlussteil 1 auf dem unteren Teil 2f des Dichtungsteiles 2 aufliegt, und dass das Abschlussteil 1 das obere Teil 2g des Dichtungsteils ringförmig umschliesst. Das Hauptteil 1e bedeckt den Ausschnitt 3 des Dichtungsteiles 2, und liegt auf den Endteilen 2c, 2d in Richtung der Senkrechten S auf. Dadurch weist die Dichtungsringscheibe 12 über die ganze Fläche der Kolbenstange 4 eine dichtende Funktion auf. Das Hauptteil 1e sowie das Dichtungsteil 2 weisen in Umfangsrichtung des Dichtungsteils 2 ein Spiel S1 auf. Vorteilhafterweise ist die Dichtungsringscheibe 12 von einer Schlauchfeder 13 umgeben, so dass die Dichtungsringscheibe 12 unter eine Vorspannung steht. Während dem Einsatz der Dichtungsringscheibe 12 als Dichtelement führt die Bewegung der Kolbenstange 4 zu einem Verschleiss der Dichtfläche 2a, was einen Materialabtrag bewirkt. Die Schlauchfeder 13, das Spiel S1 sowie die federnden Eigenschaften der Dichtungsringscheibe 12 gewährleisten, dass die Dichtfläche 2a weiterhin auf der Oberfläche der Kolbenstange 4 aufliegen kann. Fig. 1f zeigt eine Seitenansicht der Dichtungsringscheibe gemäss Fig. 1e.

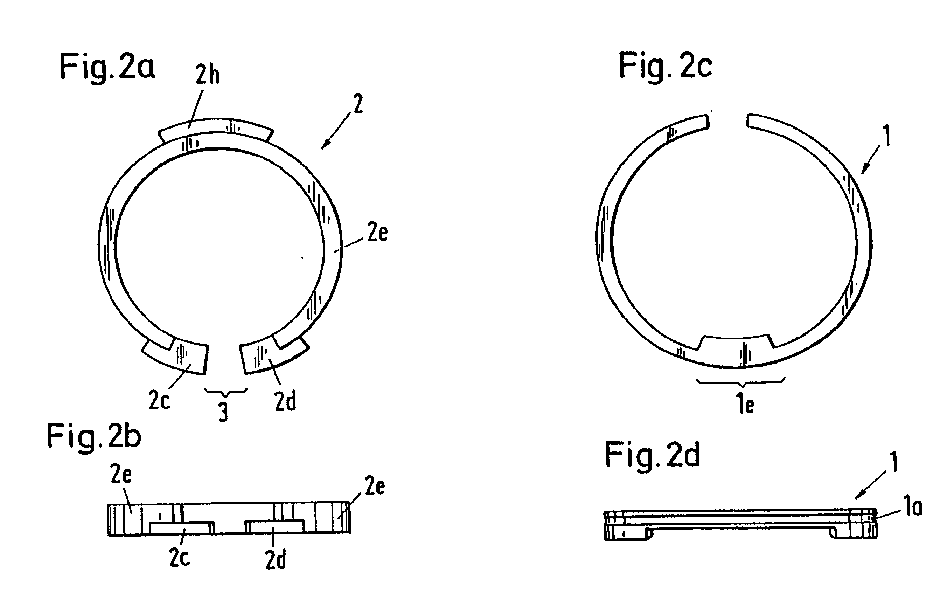

Fig. 2a zeigt ein weiteres Ausführungsbeispiel eines Dichtungsteils 2, das ein Hauptteil 2e aufweist, welches beidseitig in die Endteile 2c, 2d ausläuft. Das Dichtungsteil 2 ist wiederum ringförmig ausgestaltet mit einem sektorartigen Ausschnitt 3. Weiter weist das Dichtungsteil 2 auf der dem Ausschnitt 3 gegenüberliegenden Seite eine Stützfläche 2h zum stützen des Abschlussteils 1 auf. Fig. 2b zeigt eine Seitenansicht der Ausführungsform eines Dichtungsteils gemäss Fig. 2a. Wie in Fig. 1b sind auch hier die Endteile 2c, 2d dünner ausgestaltet als das Hauptteil 2e in Richtung der Senkrechten S. Fig. 2c zeigt ein Abschlussteil 1 mit Hauptteil 1e. Fig. 2d zeigt eine Seitenansicht des Abschlussteils gemäss Fig. 2c mit einer an der Aussenfläche in Umfangsrichtung des Abschlussteils verlaufenden Ausnehmung 1a für eine Schlauchfeder 13. Das Dichtungsteil 2 sowie das Abschlussteil 1 lassen sich ähnlich wie in Fig. 1e dargestellt zu einer Dichtungsringscheibe 12 zusammensetzen, so dass sich entlang der Oberfläche der Kolbenstange 4 eine Dichtung ergibt.

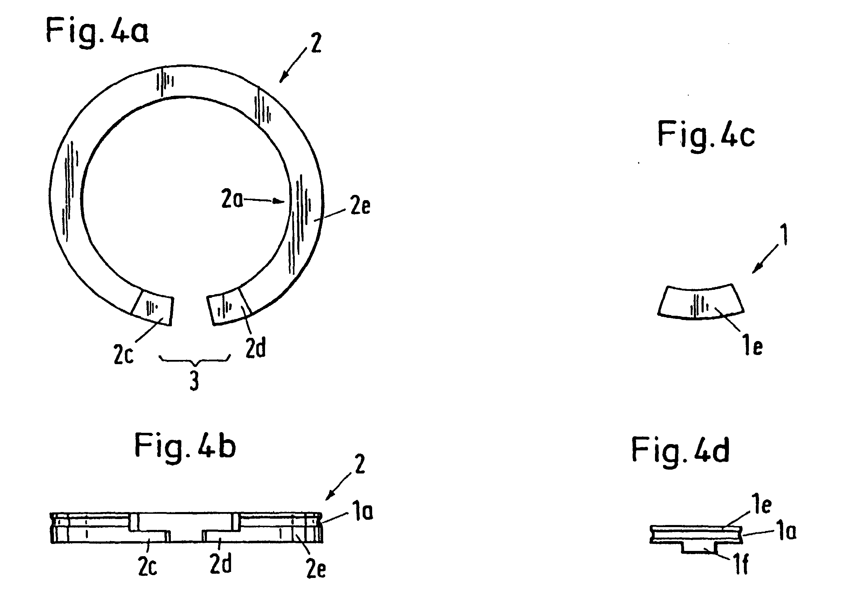

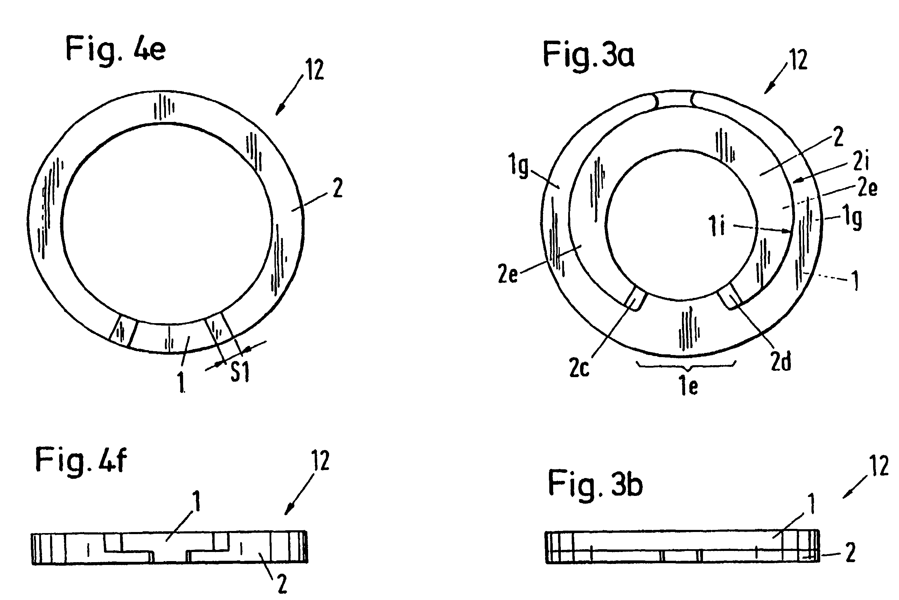

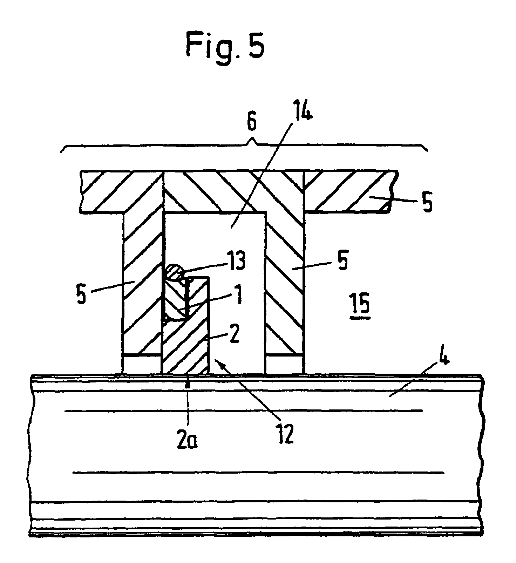

Fig. 3a zeigt ein weiteres Ausführungsbeispiel einer Dichtungsringscheibe 12. Das Dichtungsteil 2 verjüngt sich in radialer Richtung gegen das Endteil 2c, 2d hin. Ein solches sich verjüngendes Dichtungsteil weist den Vorteil auf, dass die elastischen Eigenschaften in Umfangsrichtung ungefähr ähnlich verlaufen. Ein derart ausgestaltetes Dichtungsteil 2 kann von einem Abschlussteil wie in Fig. 1c dargestellt umgeben sein. In diesem Falle wäre die Kolbenstange 4 asymmetrisch bezüglich dem Umfang des Abschlussteils 1 angeordnet. Eine weitere Möglichkeit ist die in Fig. 3a dargestellte Ausführungsform eines Abschlussteils, das ebenfalls einen ausgehend vom Hauptteil 1e sich verjüngende Endteile 1g aufweist, wobei das Dichtungsteil 2 und das Abschlussteil 1 gegenseitig derart angepasst sind, dass das Dichtungsteil 2 einen axialen, zur Kolbenstange exzentrischen Ansatz 2i aufweist, und dass das Abschlussteil 1 eine hierzu komplementäre, exzentrische Ausnehmung 1i aufweist, derart dass die Kolbenstange 4 bezüglich der gesamten Dichtungsringscheibe 12 mittig liegt. Fig. 3b zeigt eine Seitenansicht der Ausführungsform einer Dichtungsringscheibe 12 gemäss Fig. 3a. Fig. 4a zeigt ein weiteres Dichtungsteil 2 mit Hauptteil 2e welches beidseitig in die Endteile 2c, 2d ausläuft, wobei, wie in Fig. 4b dargestellt, die Endteile 2c, 2d wiederum dünner gegenüber dem Hauptteil 2e dargestaltet sind. Fig. 4c zeigt ein Abschlussteil 1, das im vorliegenden Ausführungsbeispiel nur aus dem Hauptteil 1e besteht, welches, wie in Fig. 4d dargestellt, ein Teil 1f aufweist. Das Abschlussteil 1e lässt sich wie in Fig. 4e dargestellt in den Ausschnitt 3 des Dichtungsteils 2 einfügen, wobei das Abschlussteil 1 gegenüber dem Dichtungsteil 2 in Umfangsrichtung des Dichtungsteils 2 verlaufend angeordnet ist und ein in dieser Richtung verlaufendes Spiel S1 aufweist. Fig. 4f zeigt eine Seitenansicht der Ausführungsform gemäss 4e. Entlang der Umfangsrichtung des Dichtungsteils 2 sowie der Umfangsrichtung des Hauptteils 1e kann eine Ausnehmung 1a angeordnet sein zur Aufnahme einer Schlauchfeder 13. Die Dichtungsringscheibe 12 eignet sich insbesondere für eine Dichtungsanordnung für eine Kolbenstange 4 mit einem kreisförmigen Querschnitt, wie dies in Fig. 5 dargestellt ist. Zum grundsätzlichen Aufbau einer Trockenlaufdichtungsanordnung oder Packung 6 gehört zumindestens eine die Kolbenstange 4 umgebende Dichtungskammer 14, die aus zwei Kammerringen 5 gebildet wird und die zu dem zugeordneten Zylinderraum 15 hin dichtend verschraubt ist. Sie besitzt eine zweiteilige Dichtungsringscheibe 12, welche von einer Schlauchfeder 13 umgeben ist und ein Abschlussteil 1 sowie ein Dichtungsteil 2 aufweist. Die Dichtungsringscheibe 12 liegt unter Vorspannung mit Dichtflächen 2a an der Kolbenstange 4 an.

## Patentansprüche

1. Dichtungsringscheibe für eine Kolbenstange mit einem kreisförmigen Querschnitt, aufweisend ein ringförmiges Dichtungsteil (2) mit einem sektorartigen Ausschnitt (3), wobei ein Abschlussteil (1) ein dem Ausschnitt (3) angepasstes Hauptteil (1e) mit einer nach innen gerichteten Dichtfläche aufweist, und wobei das Dichtungsteil (2) und das Abschlussteil (1) derart gegenseitig angepasst ausgestaltet sind, dass das Hauptteil (1e) in Umfangsrichtung des Dichtungsteils (2) verlaufend in das Dichtungsteil (2) einfügbar ist und das Hauptteil (1e) den Ausschnitt (3) bedeckt, um die beiden Teile (1,2) zu einer einzigen Dichtungsringscheibe mit einer nach innen gerichteten Dichtfläche (2a) zusammenzusetzen, welche aus der Dichtfläche des Dichtungsteils (2) und der nach innen gerichteten Dichtfläche des Hauptteils (1e) besteht, und wobei das Dichtungsteil (2) ein Hauptteil (2e) aufweist, welches beidseitig in je ein Endteil (2c,2d) ausläuft, wobei die Endteile (2c, 2d) in einer zu der durch das Dichtungsteil (2) aufgespannten Ebene senkrechten Richtung (S) dünner ausgestaltet sind als das Hauptteil(2e), und wobei das Hauptteil (1e) in senkrechter Richtung (S) auf den Endteilen (2c, 2d) aufliegt, und wobei das Hauptteil (2e) des Dichtungsteils (2) und das Hauptteil (1e) des Abschlussteils (1) derart gegenseitig angepasst ausgestaltet sind, dass die beiden Hauptteile (1e, 2e) in Umfangsrichtung ein gegenseitiges Spiel (S1) aufweisen.

2. Dichtungsringscheibe nach Anspruch 1, **dadurch gekennzeichnet, dass** das Dichtungsteil (2) federnde Eigenschaften aufweist.

3. Dichtungsringscheibe nach einem der Ansprüche 1 bis 2, **dadurch gekennzeichnet, dass** das Abschlussteil (1) beidseitig vom Hauptteil (1e) ausgehende Endteile (1c,1d) aufweist, und dass die Endteile (1c,1d) das Dichtungsteil (2) teilweise umfassend auf diesem aufliegen.

4. Dichtungsringscheibe nach Anspruch 3, **dadurch gekennzeichnet, dass** das Abschlussteil (1) federnde Eigenschaften aufweist.

5. Dichtungsringscheibe nach einem der Ansprüche 1 bis 4, **dadurch gekennzeichnet, dass** das Dichtungsteil (2) L-förmig ausgestaltet ist, wobei eine Breitseite eine zur Kolbenstange hin orientierte Dichtfläche (2a) bildet.

6. Dichtungsringscheibe nach einem der Ansprüche 1 bis 5, **dadurch gekennzeichnet, dass** die Dichtungsringscheibe (12) einen metallischen Umfassungsring (13) aufweist.

7. Dichtungsringscheibe nach einem der Ansprüche 1 bis 6, **dadurch gekennzeichnet, dass** das Dichtungsteil (2) in radialer Richtung eine Dicke aufweist, die gegen den sektorartigen Ausschnitt (3) hin abnimmt.

8. Dichtungsringscheibe nach einem der Ansprüche 1 bis 7, **dadurch gekennzeichnet, dass** das Dichtungsteil (2) einen axialen, zur Kolbenstange exzentrischen Ansatz und das Abschlussteil (1) eine hierzu komplementäre, exzentrische Ausnehmung aufweist.

9. Dichtungsringscheibe nach einem der Ansprüche 1 bis 8, **dadurch gekennzeichnet, dass** das Dichtungsteil (2) und/oder das Abschlussteil (1) aus Kunststoff wie Polytetrafluorethylen (PTFE), einem modifizierten Hochtemperatur-Polymer wie Polyetheretherketon(PEEK), Polyetherketon(PEK), Polyimid (PI), Polyphenylensulfid (PPS), Polybenzimidazol (PBI), Polyamidimid (PAI) oder einem modifizierten Epoxidharz besteht.

## Claims

1. Sealing ring disk for a piston rod with a circular cross-section, having a ring-shaped seal part (2) with a sector-like cut-out (3), with a closure part (1) having a main part (1e) matched to the cut-out (3) and having an inwardly oriented sealing surface, and with the seal part (2) and the closure part (1) being adapted in such a manner that the main part (1e) extending in the peripheral direction of the seal part (2) being insertable in the seal part (2) and that the main part (1e) covers the cut-out (3), in order to assemble the two parts (1,2) to a single sealing ring disk with an inwardly oriented sealing surface (2a), which consist of the sealing surface of the seal part (2) and the inwardly oriented sealing surface of the main part (1e), and with the seal part (2) having a main part (2e) which runs out at each end into an end part (2c, 2d), with the end parts (2c, 2d) being made thinner than the main part (2e) in a direction (S) normal to a plane spanned by the seal part (2), and with the main part (1e) lying on the end parts (2c,2d) in the normal direction (S), and with the main part (2e) of the seal part (2) und the main part (1e) of the closure part (1) being adapted such, that both main parts (1e, 2e) have a mutual clearance (S1) in the peripheral direction.

2. Sealing ring disk in accordance with claim 1 **characterised in that** the seal part (2) has resilient properties.

3. Sealing ring disk in accordance with one of the claims 1 to 2 **characterised in that** the closure part (1) has end parts (1c, 1d) going out form the main part (1e) at both ends, and **in that** the end parts (1c, 1d) lie on the seal part (2) partially encompassing it.

4. Sealing ring disk in accordance with claim 3 **characterised in that** the closure part (1) has resilient properties.

5. Sealing ring disk in accordance with one of the claims 1 to 4 **characterised in that** the seal part (2) is executed in L-shape, with a broad side forming a sealing surface (2a) oriented toward the piston rod.

6. Sealing ring disk in accordance with one of the claims 1 to 5 **characterised in that** the sealing ring disk (12) has a metallic enclosure ring (13).

7. Sealing ring disk in accordance with one of the claims 1 to 6 **characterised in that** the seal part (2) has a thickness in the radial direction which decreases towards the sector-like cut-out (3).

8. Sealing ring disk in accordance with one of the claims 1 to 7 **characterised in that** the seal part (2) has an axial formation eccentric to the piston rod and **in that** the closure part (1) has an excentric cut-out complementary thereto.

9. Sealing ring disk in accordance with one of the claims 1 to 8 **characterised in that** the seal part (2) and/or the closure part (1) consists of a plastic such as polytetrafluoroethylene (PTFE), a modified high-temperature polymer such as polyetheretherketone (PEEK), polyetherketone (PEK), polyimide (PI), polyphenylenesulphide (PPS), polybenzimidazole (PBI), polyamideimide (PAI) or a modified epoxy resin.

## Revendications

1. Rondelle d'étanchéité pour une tige de piston avec une coupe transversale circulaire, comportant une pièce d'étanchéité annulaire (2) avec une entaille à mode de secteur (3), une pièce terminale (1) comportant une partie principale (1e) adaptée à l'entaille (3) avec une surface d'étanchéité tournée vers l'intérieur et la pièce d'étanchéité (2) ainsi que la pièce terminale (1) étant configurées de manière à être adaptées l'une à l'autre de telle sorte que la partie principale (1e) puisse être insérée dans la pièce d'étanchéité (2), de manière à s'étendre dans le sens circonférentielle de la pièce d'étanchéité (2) et de telle sorte que la partie principale (1e) recouvre l'entaille (3) afin d'assembler les deux pièces (1, 2) pour en faire une rondelle d'étanchéité unique avec une surface d'étanchéité (2a) tournée vers l'intérieur, laquelle est composée de la surface d'étanchéité de la pièce d'étanchéité (2) et de la surface d'étanchéité, tournée vers l'intérieur, de la partie principale (1e) et la pièce d'étanchéité (2) comportant une partie principale (2e) laquelle se termine des deux côtés en une partie finale (2c, 2d), les parties finales (2c, 2d) étant configurées, dans une direction verticale (S) par rapport au plan s'étendant à travers la pièce d'étanchéité (2), de manière à être plus minces que la partie principale (2e) et la partie principale (1e) reposant dans le sens vertical (S) sur les parties finales (2c, 2d) et la partie principale (2e) de la pièce d'étanchéité (2) et la partie principale (1e) de la pièce terminale (1) étant configurées de manière à s'adapter l'une à l'autre de telle sorte les deux parties principales (le, 2e) comportent un jeu mutuel (S1) dans le sens circonférentiel.

2. Rondelle d'étanchéité selon la revendication 1, **caractérisée en ce que** la pièce d'étanchéité (2) présente des propriétés élastiques.

3. Rondelle d'étanchéité selon l'une des revendications 1 à 2, **caractérisée en ce que** la pièce terminale (1) comprend des deux côtés des parties finales (1c, 1d) partant d'une partie principale (1e) et **en ce que** les parties finales (1c, 1d), entourant partiellement la pièce d'étanchéité (2), reposent sur cette dernière.

4. Rondelle d'étanchéité selon la revendication 3, **caractérisée en ce que** la pièce terminale (1) présente des propriétés élastiques.

5. Rondelle d'étanchéité selon l'une des revendications 1 à 4, **caractérisée en ce que** la pièce d'étanchéité (2) est configurée sous forme de L, un côté large formant une surface d'étanchéité (2a) orientée en direction de la tige de piston.

6. Rondelle d'étanchéité selon l'une des revendications 1 à 5, **caractérisée en ce que** la rondelle d'étanchéité (12) comprend un anneau métallique (13).

7. Rondelle d'étanchéité selon l'une des revendications 1 à 6, **caractérisée en ce que** la pièce d'étanchéité (2) comprend, dans le sens radial, une épaisseur qui décroît en direction de l'entaille à mode de secteur (3).

8. Rondelle d'étanchéité selon l'une des revendications 1 à 7, **caractérisée en ce que** la pièce d'étanchéité (2) comprend un épaulement axial, excentrique par rapport à la tige de piston et la pièce terminale (1) un évidement excentrique, complémentaire.

9. Rondelle d'étanchéité selon l'une des revendications 1 à 8, **caractérisée en ce que** la pièce d'étanchéité (2) et/ou la pièce terminale (1) sont composées de matière plastique telle que le polytetrafluoréthylène (PTFE), d'un polymère modifié résistant à des températures élevées tels que la polyétheréthercétone (PEEK), la polyéthercétone (PEK), le polyimide (PI), le polysulfure de phénylène (PPS), le polybenzimidazol (PBI), le polyamidimide (PAI) ou une résine epoxyde modifiée.
